# EUROPÄISCHE PATENTSCHRIFT

(11) **EP 2 987 618 B1**
(45) Veröffentlichungstag und Bekanntmachung des Hinweises auf die Patenterteilung: **26.05.2021**
(21) Anmeldenummer: 14181656.1
(22) Anmeldetag: 20.08.2014
(51) Int. Cl.: B29C 49/58, B29C 49/66, B29C 49/06, B29C 49/64

(54) **Formfüllmaschine und Verfahren zum Formen und Füllen von Behältern**
Mould filling machine and method of moulding and filling containers
Remplisseuse de moule et procédé de moulage et de remplissage de récipients

(43) Veröffentlichungstag der Anmeldung: 24.02.2016
(73) Patentinhaber: Krones AG, 93073 Neutraubling (DE)
(72) Erfinder: Auburger, Michael, 93073 Neutraubling (DE)
(74) Vertreter: Grünecker Patent- und Rechtsanwälte PartG mbB

(56) Entgegenhaltungen:
- DE-A1-102008 032 123
- DE-A1-102011 012 751
- FR-A1- 2 828 829
- JP-A- 2000 043 129

## Beschreibung

Die Erfindung betrifft eine Formfüllmaschine zum Ausformen und Füllen von Kunststoffbehältern umfassend wenigstens eine Behandlungsstation zum expandierenden Umformen von Kunststoffvorformlingen zu Kunststoffbehältern in einer Hohlform und zum Einfüllen eines im Wesentlichen flüssigen Produkts oder wenigstens einer flüssigen oder festen Komponente des Produkts in die Kunststoffbehälter in der Hohlform.

Bekanntermaßen lassen sich Kunststoffbehälter im Streckblasverfahren aus Vorformlingen herstellen. Insbesondere handelt es sich bei den Kunststoffbehältern vor dem Expandieren um Vorformlinge, die bevorzugt die Form eines Reagenzglases aufweisen bzw. eine einzige Öffnung aufweisen. In der Nähe dieser Öffnung befindet sich ein Mündungsbereich, welcher beispielsweise mit einem schon im Spritzgussverfahren angeformten Gewinde für einen Verschluss versehen wurde. Zusätzlich kann im Mündungsbereich ein Tragring vorgesehen sein, welcher zum Transport vorgesehen ist.

Alternativ zu einem Aufblasen der Behälter mit Pressluft beschreibt die EP 1529620 B1 ein Verfahren zum hydraulischen Umformen von Vorformlingen zu Kunststoffflaschen. Zu diesem Zweck werden die Vorformlinge zuerst erwärmt, in eine Hohlform verbracht und dort in Längsrichtung gereckt. Es wird ferner Mineralwasser oder dergleichen unter Überdruck eingeleitet, um die endgültige Behälterform herzustellen. Das Mineralwasser verbleibt im Behälter, sodass ein nachfolgender separater Abfüllschritt entbehrlich ist.

Die US 2011/0031659 A1 beschreibt ferner ein Verfahren, bei dem ein erwärmter Vorformling mittels einer Reckstange gereckt und anschließend mittels eines inkompressiblen Fluids, insbesondere Wasser, hydraulisch zu einem Behälter geweitet wird. Danach wird das Fluid durch Pressluft verdrängt und läuft aus dem Behälter ab. Die DE 10 2011 012 751 offenbart eine Vorrichtung gemäß dem Oberbegriff der Anspruch 1 und ein Verfahren gemäß dem Oberbegriff der Anspruch 8.

Bei Formfüllmaschinen tritt das Problem auf, dass sich die ausgeformten Kunststoffbehälter aufgrund des Eigengewichts und des Gewichts des Produkts noch verformen können, wenn sie aus den Hohlformen entnommen wurden, weil die Kunststoffbehälter besonders dort, wo Materialanhäufungen vorliegen, beispielsweise am Tragring, wenige Millimeter unter dem Tragring und am Boden, noch nicht ausgehärtet sind.

Daher ist es eine Aufgabe der vorliegenden Erfindung, bekannte Vorrichtungen und Verfahren zum Ausformen und Füllen von Kunststoffbehältern in vorteilhafter Weise weiterzubilden, so dass eine Verformung der ausgeformten und befüllten Kunststoffbehälter nach der Entnahme aus der Hohlform verhindert werden kann.

Diese Aufgabe wird mit einer Formfüllmaschine nach Anspruch 1 gelöst. Vorteilhafte Ausführungsformen der Erfindung sind in den Unteransprüchen definiert.

Die erfindungsgemäße Formfüllmaschine zum Ausformen und Füllen von Kunststoffbehältern umfasst wenigstens eine Behandlungsstation zum expandierenden Umformen von Kunststoffvorformlingen zu Kunststoffbehältern in einer Hohlform und zum Einfüllen eines im Wesentlichen flüssigen Produkts oder wenigstens einer flüssigen oder festen Komponente des Produkts in die Kunststoffbehälter in der Hohlform. Erfindungsgemäß umfasst die Formfüllmaschine eine Kühleinrichtung zum direkten oder indirekten Kühlen der gefüllten Kunststoffbehälter.

Die Kühleinrichtung ist im Auslaufbereich der Formfüllmaschine.

Der Auslaufbereich ist dabei der Bereich, in dem die Kunststoffbehälter aus den Hohlformen mittels eines Entnahme- und/oder Transportelements entnommen und von der jeweiligen Behandlungsstation wegtransportiert werden und endet mit der Einleitung des folgenden Prozessschritts, beispielsweise des Verschließens der Kunststoffbehälter.

Flüssigkeiten, auch solche mit darin gelöstem Kohlendioxid oder dergleichen, sind definitionsgemäß hinsichtlich ihrer Funktion beim Ausformen und Füllen der Behälter inkompressible Fluide im Gegensatz zu Gasen, die funktional als kompressible Fluide definiert sind.

Die Kühleinrichtung kann zum Kühlen von einzelnen Bereichen, insbesondere von Boden, Tragring, Hals und/oder Schulter, der Kunststoffbehälter oder der gesamten Kunststoffbehälter ausgebildet sein. Das ermöglicht, insbesondere die Stellen, an denen typischerweise Materialanhäufungen vorliegen und die daher langsamer auskühlen als andere Bereiche des Kunststoffbehälters, gezielt zu Kühlen und eine Verformung zu verhindern.

Die Kühleinrichtung kann ein oder mehrere Kühlelemente umfassen. Das bzw. mindestens eines der, insbesondere alle Kühlelemente können bewegbar, insbesondere schwenkbar oder verschiebbar, ausgebildet sein. Insbesondere können die Kühlelemente derart bewegbar ausgebildet sein, dass ihre Position zum Kühlen verschiedener Bereiche und/oder zum Kühlen von Kunststoffbehältern verschiedener Form eingestellt werden kann. Die Kühleinrichtung kann einen Antrieb, beispielsweise einen Motor umfassen, der derart ausgebildet ist, dass er die Kühlelemente bewegen kann. Der Motor kann durch eine Steuereinrichtung ansteuerbar sein. Die Steuereinrichtung kann derart ausgebildet sein, dass sie den Motor basierend auf vorgegebenen Werten, beispielsweise vorgegebenen Sollpositionen von Kühlelementen, umfassen.

Die Kühleinrichtung kann ein oder mehrere Kühlelemente umfassen, die jeweils zum Kühlen von Greif- und/oder Halteelementen, beispielsweise Greifern und/oder Klammern, die zum Entnehmen der Kunststoffbehälter aus der Hohlform ausgebildet sind, umfassen. Die Greifer und/oder Klammern können beispielsweise die Greifer oder Klammern im Auslaufstern oder Transferstern sein.

Das bzw. die Kühlelemente können unmittelbar im Übergabebereich der Kunststoffbehälter von der Hohlform and den Auslaufstern bzw. Transportstern angeordnet sein.

Ein, beispielsweise wie oben beschriebenes, indirektes Kühlen der Kunststoffbehälter mittels der gekühlten Greif- und/oder Halteelemente hat den Vorteil, dass keine Kühlmittelrückstände an dem Kunststoffbehälter verbleiben.

Die Kühleinrichtung kann eine Einheit zur Druckluftkühlung und/oder eine Einheit zur Flüssigkühlung umfassen. Insbesondere können die Einheit zur Druckluftkühlung und/oder die Einheit zur Flüssigkühlung jeweils zum direkten Kühlen von einem oder mehreren Kunststoffbehältern oder zum Kühlen eines oder mehrerer Greif- und/oder Halteelemente ausgebildet sein.

Die Kühleinrichtung kann ein oder mehrere Kühlelemente umfassen, die zum Kühlen einer Abstellfläche für einen oder mehrere der Kunststoffbehälter ausgebildet sind. Die Abstellfläche kann beispielsweise in Form eines Transportbandes ausgebildet sein, das beispielsweise die Plastikbehälter von der Hohlform wegtransportiert. Alternativ oder zusätzlich kann die Kühleinrichtung ein oder mehrere Kühlelemente umfassen, die zum Kühlen von einer oder mehreren Aufnahmen ausgebildet sind, in die jeweils einer der Kunststoffbehälter eingeführt werden kann, und, insbesondere, in der der Kunststoffbehälter abgestellt werden kann. Die Aufnahme kann beispielsweise in Form einer Schüssel ausgebildet sein, die entweder unmittelbar gekühlt oder mit einem Kühlmittel befüllt ist.

Dies dient zur Kühlung des Bodens der Kunststoffbehälter, wo typischerweise viel Material angehäuft ist und wo es bei nicht ausreichender Aushärtung aufgrund des Gewichts des Produkts zum unerwünschten Ausstülpen des Bodens kommen kann.

Die Kühleinrichtung kann mindestens ein Kühlelement in Form eine Sprüheinheit zum Besprühen zumindest eines Teils der Kunststoffbehälter und/oder der Greif- und/oder Halteelemente, umfassen, insbesondere zum Verdampfen und Besprühen mit Trockeneis.

Der Vorteil von Trockeneis besteht darin, dass es sublimiert, also unmittelbar von der festen in die gasförmige Phase übergeht, so dass keine Auffangrinne für eine Kühlflüssigkeit nötig ist. Zudem ist Trockeneis nicht abrasiv, erzeugt also keine Korrosion.

Die Kühleinrichtung kann stationär angeordnet sein oder zumindest teilweise bewegbar, insbesondere mit dem Kunststoffbehälter, insbesondere entlang eines Auslaufsterns oder Transfersterns, mitfahrbar, ausgebildet sein. Es können insbesondere genau eines, mehrere oder alle Kühlelemente bewegbar, insbesondere mitfahrbar, ausgebildet sein. Die mitfahrbaren Teile der Kühleinrichtung können beispielsweise auf einer Schiene mitfahrbar sein. Die Kühleinrichtung kann insbesondere einen Antrieb, beispielsweise einen Motor, umfassen, der zum Bewegen der mitfahrbaren Teile entlang der Schiene ausgebildet ist.

Merkmale und Vorteile, die oben im Zusammenhang mit der Vorrichtung beschrieben wurden, sind ebenfalls auf das Verfahren anwendbar, ohne explizit wiederholt zu werden.

Das erfindungsgemäße Verfahren zum expandierenden Umformen von Kunststoffvorformlingen zu Kunststoffbehältern in einer Hohlform und zum Einfüllen eines im Wesentlichen flüssigen Produkts oder wenigstens einer flüssigen oder festen Komponente des Produkts in die Kunststoffbehälter in der Hohlform umfasst, dass die Kunststoffbehälter, nach dem Befüllen, mittels einer Kühleinrichtung direkt oder indirekt gekühlt werden.

Das Kühlen erfolgt
im Auslaufbereich der Formfüllmaschine. -Die Kühleinrichtung kann eine der oben beschriebenen Kühleinrichtungen sein.

Das Kühlen der Kunststoffbehälter kann ein Kühlen von einzelnen Bereichen, insbesondere von Boden, Greifring, Hals und/oder Schulter, der Kunststoffbehälter oder der gesamten Kunststoffbehälter umfassen.

Das Kühlen der Kunststoffbehälter kann ein Kühlen von Greif- und/oder Halteelementen, beispielsweise Greifern und/oder Klammern, umfassen, die zum Entnehmen der Kunststoffbehälter aus der Hohlform ausgebildet sind.

Die Kunststoffbehälter können durch Druckluft und/oder Kontakt mit einer Kühlflüssigkeit gekühlt werden. Die Druckluft kann dabei durch die Kühleinrichtung selbst erzeugt oder dieser zugeführt werden. Die Kühlflüssigkeit kann innerhalb oder außerhalb der Kühleinrichtung gekühlt werden. Die Kühlflüssigkeit kann aus anderen Prozessbereichen entnommen bzw. weiterverwendet werden.

Die Kunststoffbehälter können zum Kühlen auf eine gekühlte Abstellfläche gestellt werden oder in eine Aufnahme eingeführt, insbesondere darin abgestellt, werden, die den Behälter entweder unmittelbar kühlt oder ein Kühlmittel enthält, mit dem der Kunststoffbehälter in Kontakt gebracht wird.

Das Kühlen kann umfassen, dass zumindest ein Teil der Kunststoffbehälter und/oder die Greifer und/oder die Klammern besprüht werden, insbesondere mit verdampftem Trockeneis besprüht werden.

Statt Trockeneis können auch andere Fluide zur Kühlung verwendet werden, insbesondere beispielsweise Kühlwasser oder flüssige Gase, beispielsweise Stickstoff. Die Kunststoffbehälter und/oder die Greif- und/oder Halteelemente können damit beispielsweise besprüht, eingetaucht, umspült und/oder anderweitig in Kontakt gebracht werden.

Es ist darauf zu achten, dass beispielsweise im Gelenkbereich der Greif- und/oder Halteelemente kein Besprühen mit Trockeneis erfolgt, entweder durch Anordnung der Kühleinrichtung und/oder durch Anbringen eines Kälteschutzes an den Gelenken.

Die Kunststoffbehälter können mit einer Kühleinrichtung gekühlt werden, wobei sich zumindest ein Teil der Kühleinrichtung mit den Kunststoffbehältern mitbewegt, insbesondere entlang eines Transfersterns oder Auslaufsterns.

Anstatt in einer im Stand der Technik bekannten von der Streckblasmaschine entkoppelten Spritzgussmaschine können die Vorformlinge auch direkt von einer stromaufwärts angeordneten Spritzgussvorrichtung erzeugt und im noch aufgewärmten Zustand weiter an die Form- und Füllvorrichtung weitertransportiert werden. Energetisch gesehen bietet das den Vorteil, dass ein Teil der Wärme nicht an die Umgebung verloren geht. Unter Umständen. muss jedoch noch eine Zwischenkonditioniereinrichtung vorgesehen werden, welche die Vorformlinge nur geringfügig temperiert (kleiner als plus oder minus 50°C) bzw. ein Temperaturprofil aufbringt. Werden die Vorformlinge innerhalb eines Reinraums spritzgegossen, so ist unter Umständen keine weitere Sterilisation dieser nötig, wenn sich der Reinraum bis zu einer Position hin erstreckt, an der ein Verschluss auf den Behälter nach dem Befüllen aufgebracht wird.

Insbesondere finden die Herstellung bzw. Expansion und das Befüllen sowie auch das Nachdosieren und das Verschließen der Behälter innerhalb eines Raums mit kontaminationsarmer Umgebung statt. Die kontaminationsarme Umgebung, bei der es sich insbesondere um einen Reinraum handelt, kann durch eine oder Kombinationen der folgenden Maßnahmen hergestellt werden:
- Die kontaminationsarme Umgebung der Vorrichtung (innerhalb eines Maschinenschutzes) wird unter einen Überdruck im Vergleich zur Umgebungsatmosphäre gesetzt, indem durch Feinfilter filtrierte Luft zumindest während der Produktion in den Raum eingeblasen wird.
- Die Antriebe für verschiedenste Bewegungen der Kavität sind außerhalb des Reinraums angeordnet, so beispielsweise die Antriebe für das Öffnen und Schließen der Kavität (Form) und/oder die Antriebe für das Bewegen einer Reckstange und/oder die Antriebe für ein Anheben oder Senken eines Behälters und/oder die Antriebe für die Bewegung einer Blas- oder Fülldüse.
- Die innere Wandung des Raums wird in regelmäßigen Abständen gereinigt und/oder sterilisiert, beispielsweise über ein Bespritzen oder Bedampfen mit Lauge, Säure, Entkeimungsflüssigkeit, Wasserstoffperoxid (gasförmig oder flüssig). Insbesondere werden bei der Reinigung und/oder Sterilisation die Innen- und Außenseiten der Kavitäten, Blas- oder Fülldüsen und der Reckstangen miteinbezogen. Insbesondere werden aber auch die inneren Wandungen des Maschinenschutzes einbezogen.
- Die kontaminationsarme Umgebung wird gegen die Umgebungsatmosphäre abgedichtet. Bei einem Rundläufer kann es sich bei der Dichtung um ein Wasserschloss oder eine Gummidichtung handeln, welche(s) den drehenden Teil zum stehenden Teil der Vorrichtung abdichtet.

Insbesondere werden die Behälter bzw. Vorformlinge vor einem Einbringen in die kontaminationsarme Umgebung sterilisiert.

Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

Weitere Merkmale und Vorteile werden nachfolgend anhand der beispielhaften Figuren erläutert. Dabei zeigt:
- Figur 1: eine schematische, nicht-maßstabsgetreue Darstellung einer Formfüllmaschine;
- Figur 2: eine schematische, nicht-maßstabsgetreue Darstellung einer Behandlungsstation der Formfüllmaschine;
- Figur 3: eine schematische, nicht-maßstabsgetreue Darstellung des Auslaufbereichs der Formfüllmaschine nach einem ersten Ausführungsbeispiel;
- Figur 4: eine schematische, nicht-maßstabsgetreue Darstellung einer ersten Kühleinrichtung;
- Figur 5: eine schematische, nicht-maßstabsgetreue Darstellung einer zweiten Kühleinrichtung;
- Figur 6: eine schematische, nicht-maßstabsgetreue Darstellung des Auslaufbereichs der Formfüllmaschine nach einem zweiten Ausführungsbeispiel;
- Figur 7: eine schematische, nicht-maßstabsgetreue Darstellung einer dritten Kühleinrichtung;
- Figur 8: eine schematische, nicht-maßstabsgetreue Darstellung einer vierten Kühleinrichtung; und
- Figur 9: eine schematische, nicht-maßstabsgetreue Darstellung einer fünften Kühleinrichtung.

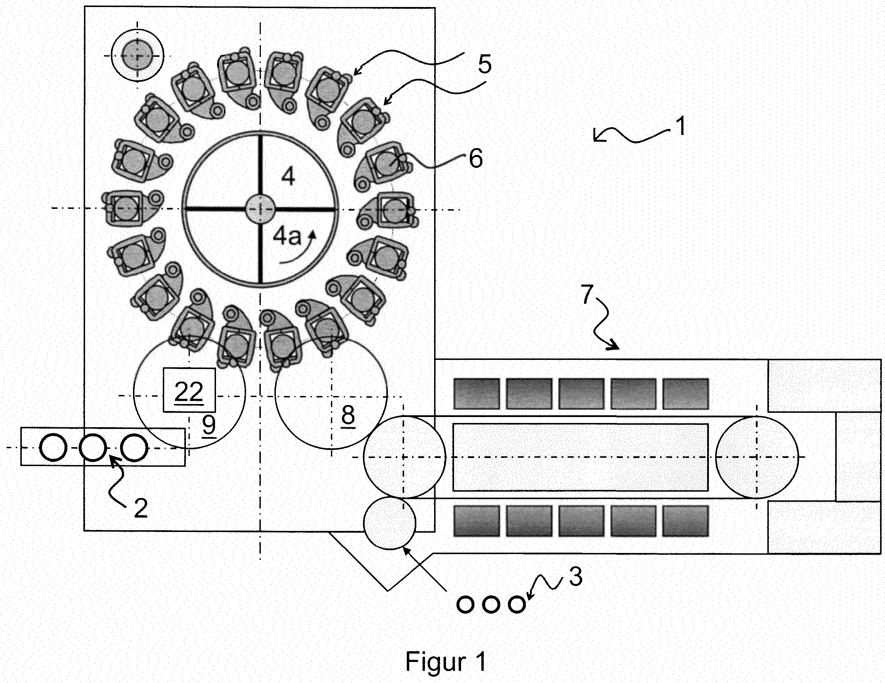

Figur 1 zeigt eine Formfüllmaschine 1 zum Ausformen und Füllen von Kunststoffbehältern 2. Die Behälter werden durch expandierendes Umformen von Kunststoffvorformlingen 3 erhalten. Dies erfolgt für jeden Kunststoffvorformling 3 jeweils in einer Behandlungsstation 5. Die Formfüllmaschine 1 umfasst ein Karussell 4, an dem die Behandlungsstationen 5 angebracht sind und das im Betrieb kontinuierlich in Drehrichtung 4a rotiert. Insbesondere ist eine Vielzahl von Behandlungsstationen 5 vorgesehen, welche insbesondere am Außenumfang des sich kontinuierlich drehenden Rundläufers/Karussells 4 angeordnet sind. Der Rundläufer 4 dreht sich insbesondere um eine vertikale Achse, deren Verlängerung den Erdmittelpunkt schneidet.

Insbesondere sind die Stationen 5 alle in äquidistanten Abständen zueinander angeordnet. Die Behandlungsstation umfasst eine Hohlform 6, in der die Kunststoffbehälter 2 ausgeformt und das Produkt eingefüllt werden. Die Stationen 5 weisen insbesondere Kavitäten auf, innerhalb derer die Behälter gegen die inneren Wände der Kavität expandiert werden, so dass die fertig ausgeformten Behälter 2 die (negative) Form der inneren Wände der Kavität erhalten. Die Hohlform 6 wird zum Einbringen der Kunststoffvorformlinge 3 und zum Entnehmen der Kunststoffbehälter 2 geöffnet und zum Ausformen und Füllen geschlossen. Die Kunststoffvorformlinge 3 werden in einem Ofen 7, beispielsweise mittels Infrarotstrahlung oder Mikrowellenstrahlung, erwärmt und mittels eines Einlaufsterns 8 in die jeweilige Behandlungsstation transportiert. Während es sich beim Mikrowellenofen bevorzugt um einen Rundläufer handelt, werden die Vorformlinge 3 beim Infrarotofen zumindest einen Teil der Strecke geradlinig transportiert. Nach dem Ausformen und Füllen werden die Kunststoffbehälter 2 mittels eines Auslaufsterns 9 im Auslaufbereich der Formfüllmaschine aus der Hohlform entnommen. Im Auslaufbereich ist zudem eine Kühleinrichtung 22 angeordnet.

Insbesondere ist daran gedacht, die Behälter noch innerhalb der Kavität zu verschließen. Hierfür kann an der Peripherie des Rundläufers eine Verschlusszuführung angeordnet sein.

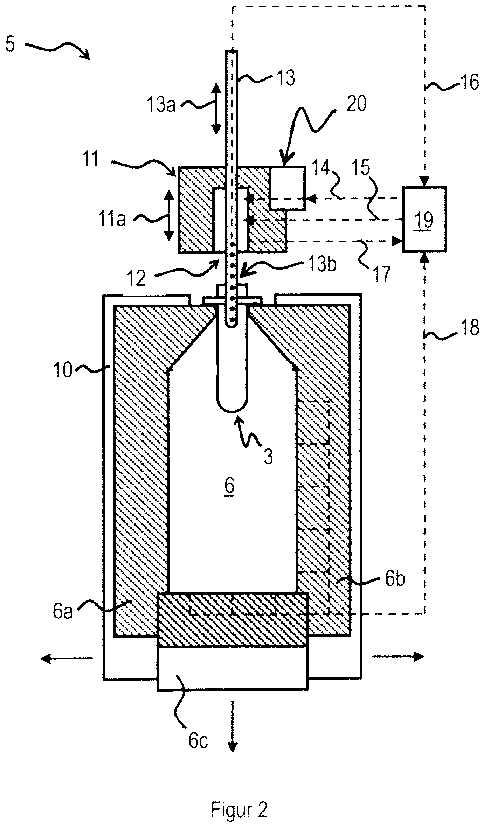

Figur 2 zeigt eine Seitenansicht der Behandlungsstation 5. In der Figur sind ein Ventilkopf 11 und der Hub 11a der Ventileinheit bezüglich der Hohlform 6 gezeigt. Die Hohlform 6 umfasst die Formteile 6a bis 6c. Die Hohlform wird durch einen, insbesondere mehrteiligen, Formträger 10 gehalten. Die Hohlform wird zum Einbringen der Kunststoffvorformlinge 3 und zum Entnehmen der Kunststoffbehälter 2 geöffnet (wie mit den Pfeilen in Figur 2 angedeutet) und zum Ausformen und Füllen geschlossen. Zudem zeigt die Figur eine Fluid- bzw. Blasdüse 12. Eine Reckstange 13, mit der der Kunststoffvorformling 3 auf die Solllänge (entspricht der Höhe des fertigen Kunststoffbehälters) gestreckt wird, indem sie in den Kunststoffvorformling 3 eingeführt wird, und der Hub der Reckstange bezüglich der Ventileinheit 13a sind ebenfalls in Figur 2 abgebildet. Die Reckstange umfasst Öffnungen 13b für die Zufuhr und/oder Absaugung des Formfluids bzw. des Produkts. Die Zuleitung für das Formfluid 14 und die Zuleitung für das Produkt 15 können jeweils optional mit einem Ventil (hier nicht gezeigt) versehen sein. Die Figur zeigt verschiedene Absaugleitungen, die jeweils optional ein Ventil umfassen können, nämlich die hydraulische Absaugleitung für das Formfluid 16, die pneumatische Absaugleitung für den Innenraum des Behälters beim Füllen 17 und die pneumatische Absaugleitung für die Hohlform bzw. die Außenseite des Behälters beim Füllen 18. Die hier dargestellte Behandlungsstation umfasst weiterhin einen Medienverteiler 19, beispielsweise ein gemeinsamer Drehverteiler für die Behandlungsstationen und einen Kompressor 20 für das Formfluid.

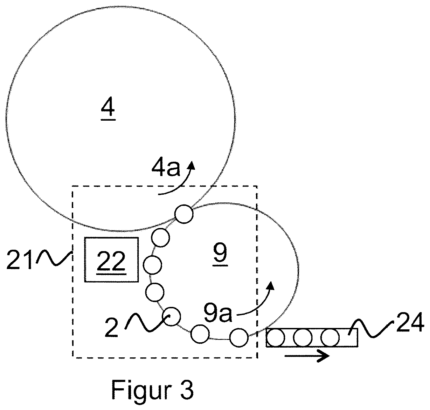

Figur 3 zeigt in Draufsicht den Auslaufbereich 21 mit der Kühleinrichtung 22. Die Kühleinrichtung 22 ist dabei unmittelbar im Übergabebereich vom in Richtung 4a rotierenden Karussell und dem in Richtung 9a rotierenden Auslaufstern 9 angeordnet. Sie ist hier außerhalb des Auslaufsterns angeordnet. Sie kann aber ebenso direkt auf dem Auslaufstern 9, beispielsweise in Form von unterhalb oder oberhalb dem Behälter angeordneten, mitlaufenden Düsen zum Beaufschlagen mit Wasser oder Druckluft, angeordnet sein. Hier ist ebenfalls ein Transportband 24 gezeigt, das nicht mehr Teil der Formfüllanlage ist sondern den nächsten Verfahrensschritt einleitet. Hier werden die Kunststoffbehälter 2 also an ein weiteres Transportelement übergeben, und der Auslaufbereich endet dort.

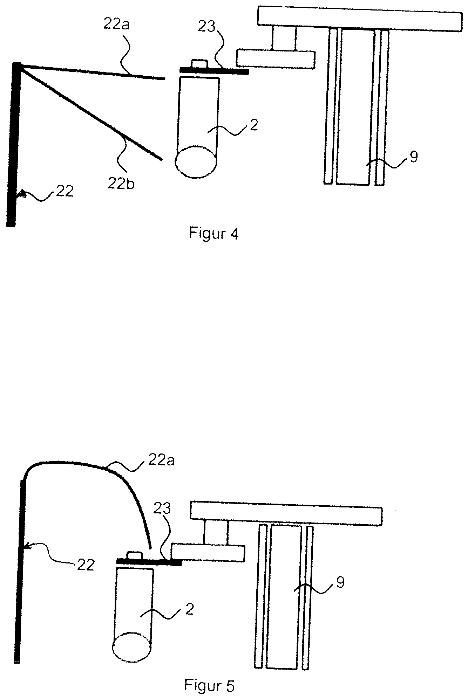

Figuren 4 und 5 zeigen in Seitenansicht jeweils zwei verschiedene Ausführungsformen einer Kühleinheit, die außerhalb des Auslaufsterns angeordnet ist.

In Figur 4 ist der im Betrieb rotierende Auslaufstern 9 gezeigt, der mittels eines Greif- und/oder Halteelements 23, in diesem Fall eines Greifers, einen befüllten Kunststoffbehälter 2 hält. Die Kühleinheit 22 ist stationär angeordnet, so dass die Kunststoffbehälter in dem Greifer daran vorbei rotieren, idealerweise unmittelbar bei der Übergabe von der Hohlform an den Greifer. Der Hals und Boden des Kunststoffbehälters werden jeweils mittels eines ersten Kühlelements 22a bzw. mittels eines zweiten Kühlelements 22b gekühlt, beispielsweise mittels Blasluft oder durch Aufsprühen von Kühlmittel, beispielsweise Trockeneis. In Figur 5 ist eine alternative stationäre Anordnung der Kühleinheit 22 dargestellt. Dabei ist Kühlelement 22a derart angeordnet, dass es den Greifer 23 kühlt, jedoch (im Wesentlichen) nicht den Kunststoffbehälter 2.

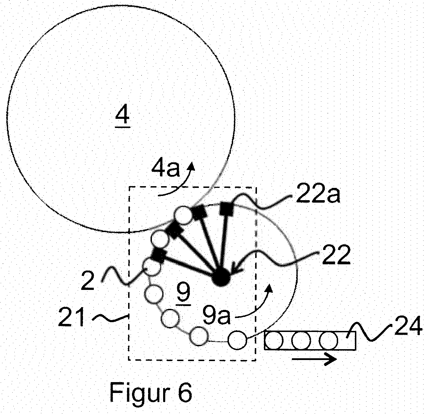

Figur 6 zeigt in Draufsicht den Auslaufbereich 21 mit der Kühleinrichtung 22, wobei hier die Kühleinrichtung, anders als in den oben beschriebenen Ausführungsformen, innerhalb des Auslaufsterns 9 angeordnet ist. In der Figur sind auch die Kunststoffbehälter 2 und die oberhalb der rotierenden Greifer angeordneten Kühlelemente 22a gezeigt. Wie in Figur 3 ist auch hier ein Transportband 24 gezeigt.

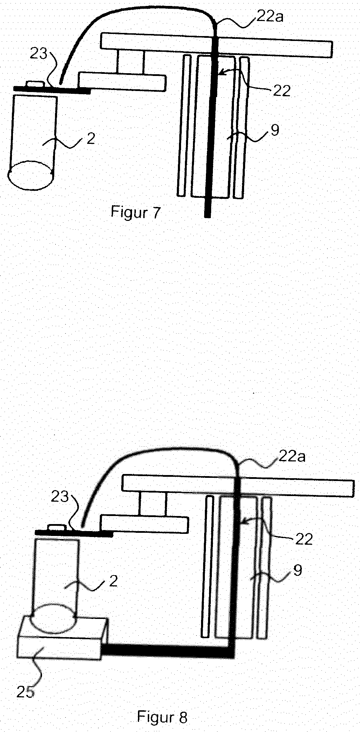

Figur 7 zeigt eine Kühleinrichtung 22, die wie in Figur 6 gezeigt innerhalb des Auslaufsterns 9 angeordnet ist. Wie in Figur 7 gezeigt kühlt das Kühlelement 22a in diesem Fall den Greifer 23, jedoch (im Wesentlichen) nicht den Kunststoffbehälter 2. Alternativ oder zusätzlich kann das Kühlelement oder ein weiteres Kühlelement der Kühleinrichtung auch den Kunststoffbehälter 2 kühlen. Bei dieser Ausführungsform ist es vorteilhaft, wenn die Kühleinrichtung nicht mitrotiert sondern, wie hier gezeigt, teilweise stationär im Inneren der Drehachse des Auslaufsternsangeordnet ist und teilweise, hier in Form der Kühlelemente, stationär oberhalb der rotierenden Greifer des Auslaufsterns angeordnet ist.

Figur 8 zeigt eine weitere Ausführungsform, wobei die Kühleinrichtung 22, die wie in Figur 6 gezeigt innerhalb des Auslaufsterns 9 angeordnet ist, eine mit dem Auslaufstern verbundene und mitrotierende Abstellfläche 25 aufweist, welche durch die Kühleinrichtung 22 gekühlt wird und auf der die Kunststoffbehälter 2 vorübergehend abgestellt werden.

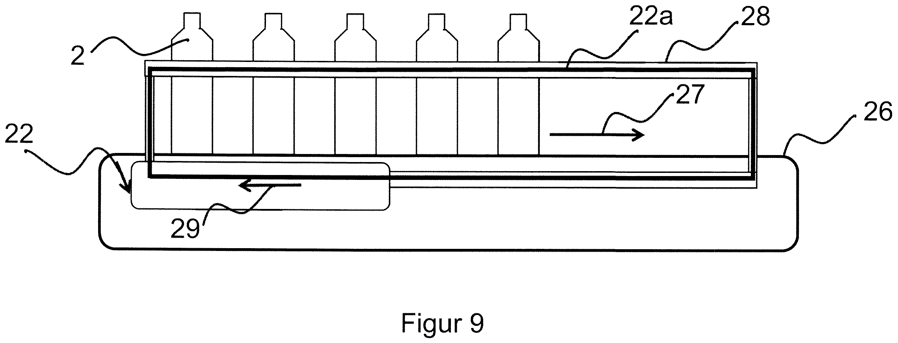

Alternativ können, wie in Figur 9 gezeigt, die Kunststoffbehälter 2 mittels eines hier nicht gezeigten Greifers, der optional gekühlt sein kann, aus der Hohlform auf ein Transportband 26 zum Abtransportieren der Kunststoffbehälter in Transportrichtung 27 gestellt werden. Das Transportband kann mittels einer Kühleinrichtung 22, die unterhalb der Abstellfläche des Transportbands angeordnet ist, gekühlt werden. Die Kunststoffbehälter können optional durch ein Gestänge 28 stabilisiert und geführt werden, das ebenfalls optional gekühlt sein kann, wie beispielsweise hier, wo das Gestänge hohl ausgebildet ist und Kühlmittelleitungen als Kühlelemente 22a der Kühleinrichtung umfasst, in denen ein Kühlmittel entlang der Strömungsrichtung 29 strömt. Zusätzlich oder alternativ können entlang des Transportbands hier nicht gezeigte Kühlelemente angeordnet sein, beispielsweise Kühlelemente, die die Behälter mit Druckluft kühlen.

In den oben beschriebenen Ausführungsformen ist die Kühleinrichtung im Auslaufbereich angeordnet. Sie kann jedoch auch im Bereich einer Verschließeinrichtung angeordnet sein.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Formfüllmaschine (1) zum Ausformen und Füllen von Kunststoffbehältern (2) umfassend wenigstens eine Behandlungsstation (5) zum expandierenden Umformen von Kunststoffvorformlingen (3) zu Kunststoffbehältern (2) in einer Hohlform (6) und zum Einfüllen eines im Wesentlichen flüssigen Produkts oder wenigstens einer flüssigen oder festen Komponente des Produkts in die Kunststoffbehälter (2) in der Hohlform (6),
wobei die Formfüllmaschine (1) eine Kühleinrichtung (22) zum direkten oder indirekten Kühlen der gefüllten Kunststoffbehälter (2) umfasst und
**dadurch gekennzeichnet, dass** die Kühleinrichtung (22) im Auslaufbereich (21) der Formfüllmaschine (1) angeordnet ist, wobei der Auslaufbereich (21) der Bereich ist, in dem die Kunststoffbehälter (2) aus der Hohlform (6) mittels eines Entnahme- und/ oder Transportelements entnommen und von der jeweiligen Behandlungsstation (5) wegtransportiert werden und der mit der Einleitung des folgenden Prozessschritts endet.

2. Formfüllmaschine nach Anspruch 1, wobei die Kühleinrichtung (22) zum Kühlen von einzelnen Bereichen, insbesondere von Boden, Tragring, Hals und/oder Schulter, der Kunststoffbehälter (2) oder der gesamten Kunststoffbehälter (2) ausgebildet ist.

3. Formfüllmaschine nach einem der vorangegangenen Ansprüche, wobei die Kühleinrichtung (22) ein oder mehrere Kühlelemente (22a, 22b) umfasst, die zum Kühlen von Greif- und/oder Halteelementen (23), insbesondere Greifern und/oder Klammern, ausgebildet sind, wobei die Greif- und/oder Halteelementen (23) zum Entnehmen der Kunststoffbehälter (2) aus der Hohlform (6) ausgebildet sind.

4. Formfüllmaschine nach einem der vorangegangenen Ansprüche, wobei die Kühleinrichtung eine Einheit zur Druckluftkühlung und/oder eine Einheit zur Flüssigkühlung umfasst.

5. Formfüllmaschine nach einem der vorangegangenen Ansprüche, wobei die Kühleinrichtung (22) zum Kühlen einer Abstellfläche (25, 26) für die Kunststoffbehälter (2) und/oder zum Kühlen einer Aufnahme für einen der Kunststoffbehälter (2), in die der Kunststoffbehälter (2) zum Kühlen eingeführt werden kann, und insbesondere in der der Kunststoffbehälter (2) abgestellt werden kann, ausgebildet ist.

6. Formfüllmaschine nach einem der vorangegangenen Ansprüche, wobei die Kühleinrichtung (22) mindestens ein Kühlelement in Form einer Sprüheinheit zum Besprühen zumindest eines Teils der Kunststoffbehälter (2) und/oder von Greif- und/oder Halteelementen (23) umfasst, insbesondere zum Verdampfen und Besprühen mit Trockeneis.

7. Formfüllmaschine nach einem der vorangegangenen Ansprüche, wobei die Kühleinrichtung (22) stationär angeordnet ist oder zumindest teilweise bewegbar, insbesondere mit dem Kunststoffbehälter (2), insbesondere entlang eines Transfersterns oder eines Auslaufsterns (9), mitfahrbar ausgebildet ist.

8. Verfahren zum expandierenden Umformen von Kunststoffvorformlingen (3) zu Kunststoffbehältern (2) in einer Hohlform (6) und zum Einfüllen eines im Wesentlichen flüssigen Produkts oder wenigstens einer flüssigen oder festen Komponente des Produkts in die Kunststoffbehälter (2) in der Hohlform (6) mittels einer Formfüllmaschine (1),
wobei die Kunststoffbehälter (2), nach dem Befüllen, mittels einer Kühleinrichtung (22) direkt oder indirekt gekühlt werden,
**dadurch gekennzeichnet, dass** die Kühleinrichtung (22) im Auslaufbereich (21) der Formfüllmaschine (1) angeordnet ist, wobei der Auslaufbereich (21) der Bereich ist, in dem die Kunststoffbehälter (2) aus der Hohlform (6) mittels eines Entnahme- und/ oder Transportelements entnommen und von der jeweiligen Behandlungsstation (5) wegtransportiert werden und der mit der Einleitung des folgenden Prozessschritts endet.

9. Verfahren nach Anspruch 8, wobei das Kühlen der Kunststoffbehälter (2) ein Kühlen von einzelnen Bereichen, insbesondere von Boden, Tragring, Hals und/oder Schulter, der Kunststoffbehälter (2) oder der gesamten Kunststoffbehälter (2) umfasst.

10. Verfahren nach Anspruch 8 oder 9, wobei das Kühlen der Kunststoffbehälter (2) ein Kühlen von Greif- und/oder Halteelementen (23), insbesondere Greifern und/oder Klammern, umfasst, die zum Entnehmen der Kunststoffbehälter (2) aus der Hohlform (6) ausgebildet sind.

11. Verfahren nach einem der Ansprüche 8 bis 10, wobei die Kunststoffbehälter (2) durch Druckluft und/oder Kontakt mit einer Flüssigkeit gekühlt werden.

12. Verfahren nach einem der Ansprüche 8 bis 11, wobei die Kunststoffbehälter (2) zum Kühlen auf eine gekühlte Abstellfläche (25, 26) gestellt werden oder in eine Aufnahme eingeführt, insbesondere darin abgestellt, werden, die den Behälter (2) entweder unmittelbar kühlt oder ein Kühlmittel enthält, mit dem der Kunststoffbehälter (2) in Kontakt gebracht wird.

13. Verfahren nach einem der Ansprüche 9 bis 13, wobei das Kühlen umfasst, dass zumindest ein Teil der Kunststoffbehälter (2) und/oder die Greif- und/oder Halteelemente (23) besprüht werden, insbesondere mit verdampften Trockeneis besprüht werden.

14. Verfahren nach einem der Ansprüche 8 bis 14, wobei sich zumindest ein Teil der Kühleinrichtung (22) mit den Kunststoffbehältern (2) mitbewegt, insbesondere entlang eines Transfersterns (9).

## Claims

1. Mould filling machine (1) for shaping and filling plastics containers (2), comprising at least one treatment station (5) for expandingly forming plastics preforms (3) to form plastics containers (2) in a hollow mould (6) and for filling a substantially liquid product or at least one liquid or solid component of the product into the plastics containers (2) in the hollow mould (6), the mould filling machine (1) comprising a cooling device (22) for directly or indirectly cooling the filled plastics containers (2) and **characterised in that** the cooling device (22) is arranged in the outlet region (21) of the mould filling machine (1), the outlet region (21) being the region in which the plastics containers (2) are removed from the hollow mould (6) by means of a removal and/or transport element and are transported away from the particular treatment station (5), and which ends with the start of the following process step.

2. Mould filling machine according to claim 1, wherein the cooling device (22) is designed to cool individual regions, in particular the base, support ring, neck and/or shoulder, of the plastics containers (2), or the entirety of the plastics containers (2).

3. Mould filling machine according to either of the preceding claims, wherein the cooling device (22) comprises one or more cooling elements (22a, 22b) which are designed to cool gripping and/or holding elements (23), in particular grippers and/or clamps, wherein the gripping and/or holding elements (23) are designed to remove the plastics containers (2) from the hollow mould (6).

4. Mould filling machine according to any of the preceding claims, wherein the cooling device comprises a unit for compressed air cooling and/or a unit for liquid cooling.

5. Mould filling machine according to any of the preceding claims, wherein the cooling device (22) is designed to cool a placement surface (25, 26) for the plastics containers (2) and/or to cool a receptacle for one of the plastics containers (2), into which receptacle the plastics container (2) can be introduced for cooling, and in particular in which the plastics container (2) can be placed.

6. Mould filling machine according to any of the preceding claims, wherein the cooling device (22) comprises at least one cooling element in the form of a spray unit for spraying at least part of the plastics containers (2) and/or gripping and/or holding elements (23), in particular for evaporating, and spraying with, dry ice.

7. Mould filling machine according to any of the preceding claims, wherein the cooling device (22) is arranged so as to be stationary or is at least partially movable, in particular is designed such that it can travel together with the plastics container (2), in particular along a transfer star or an outlet star (9).

8. Method for expandingly forming plastics preforms (3) to form plastics containers (2) in a hollow mould (6) and for filling a substantially liquid product or at least one liquid or solid component of the product into the plastics containers (2) in the hollow mould (6) by means of a mould filling machine (1), the plastics containers (2), after filling, being cooled directly or indirectly by means of a cooling device (22), **characterised in that** the cooling device (22) is arranged in the outlet region (21) of the mould filling machine (1), the outlet region (21) being the region in which the plastics containers (2) are removed from the hollow mould (6) by means of a removal and/or transport element and are transported away from the particular treatment station (5), and which ends with the start of the following process step.

9. Method according to claim 8, wherein the cooling of the plastics containers (2) comprises cooling of individual regions, in particular the base, support ring, neck and/or shoulder, of the plastics containers (2), or of the entirety of the plastics containers (2).

10. Method according to either claim 8 or claim 9, wherein the cooling of the plastics containers (2) comprises cooling of gripping and/or holding elements (23), in particular grippers and/or clamps, which are designed to remove the plastics containers (2) from the hollow mould (6).

11. Method according to any of claims 8 to 10, wherein the plastics containers (2) are cooled by compressed air and/or contact with a liquid.

12. Method according to any of claims 8 to 11, wherein, for cooling, the plastics containers (2) are placed on a cooled placement surface (25, 26) or introduced into a receptacle, in particular placed therein, which either cools the container (2) directly or contains a coolant with which the plastics container (2) is brought into contact.

13. Method according to any of claims 9 to 13, wherein the cooling comprises at least part of the plastics containers (2) and/or the gripping and/or holding elements (23) being sprayed, in particular sprayed with evaporated dry ice.

14. Method according to any of claims 8 to 14, wherein at least part of the cooling device (22) moves together with the plastics containers (2), in particular along a transfer star (9).

## Revendications

1. Machine de remplissage de moules (1) permettant de former et remplir des récipients en plastique (2), comprenant au moins un poste de traitement (5) permettant la transformation, par expansion, de préformes en plastique (3) en récipients en plastique (2) au sein d'un moule creux (6) et permettant de remplir un produit essentiellement liquide ou au moins un composant liquide ou solide du produit dans le récipient en plastique (2) au sein du moule creux (6),
dans laquelle la machine de remplissage de moules (1) comprend un dispositif de refroidissement (22) permettant un refroidissement direct ou indirect des récipients en plastique (2) remplis et
**caractérisée en ce que** le dispositif de refroidissement (22) est agencé dans la région de sortie (21) de la machine de remplissage de moules (1), dans laquelle la région de sortie (21) est la région d'où les récipients en plastique (2) sont retirés du moule creux (6) au moyen d'un élément de retrait et/ou de transport et sont transportés hors du poste de traitement (5) respectif et qui finit avec le commencement de l'étape de traitement suivante.

2. Machine de remplissage de moules selon la revendication 1, dans laquelle le dispositif de refroidissement (22) est conçu pour refroidir des régions individuelles, en particulier de fond, de collet de butée, de col et/ou d'épaulement, du récipient en plastique (2), ou la totalité du récipient en plastique (2).

3. Machine de remplissage de moules selon l'une quelconque des revendications précédentes, dans laquelle le dispositif de refroidissement (22) comprend un ou plusieurs élément(s) de refroidissement (22a, 22b) conçu(s) pour refroidir des éléments de préhension et/ou de retenue (23), en particulier des crochets et/ou des pinces, dans laquelle les éléments de préhension et/ou de retenue (23) sont conçus pour retirer le récipient en plastique (2) du moule creux (6).

4. Machine de remplissage de moules selon l'une quelconque des revendications précédentes, dans laquelle le dispositif de refroidissement comprend une unité de refroidissement à air comprimé et/ou une unité de refroidissement liquide.

5. Machine de remplissage de moules selon l'une quelconque des revendications précédentes, dans laquelle le dispositif de refroidissement (22) est conçu pour refroidir une surface de stationnement (25, 26) destinée aux récipients en plastique (2) et/ou pour refroidir un logement destiné à un des récipients en plastique (2) et au sein duquel le récipient en plastique (2) peut être introduit pour refroidir et en particulier au sein duquel le récipient en plastique (2) peut être stationné.

6. Machine de remplissage de moules selon l'une quelconque des revendications précédentes, dans laquelle le dispositif de refroidissement (22) comprend au moins un élément de refroidissement sous la forme d'une unité de pulvérisation permettant une aspersion d'au moins une partie du récipient en plastique (2) et/ou d'éléments de préhension et/ou de retenue (23), en particulier permettant une évaporation et une aspersion avec de la neige carbonique.

7. Machine de remplissage de moules selon l'une quelconque des revendications précédentes, dans laquelle le dispositif de refroidissement (22) est agencé fixe ou au moins partiellement mobile, et est en particulier conçu pour se déplacer avec le récipient en plastique (2), en particulier le long d'une étoile de transfert ou d'une étoile de sortie (9).

8. Procédé permettant de former par expansion des préformes en plastique (3) pour en faire des récipients en plastique (2) au sein d'un moule creux (6) et permettant de remplir un produit essentiellement liquide ou au moins un composant liquide ou solide du produit dans le récipient en plastique (2) au sein du moule creux (6) au moyen d'une machine de remplissage de moules (1),
dans lequel les récipients en plastique (2), après le remplissage, sont refroidis directement ou indirectement au moyen d'un dispositif de refroidissement (22), **caractérisé en ce que** le dispositif de refroidissement (22) est agencé dans la région de sortie (21) de la machine de remplissage de moules (1), dans lequel la région de sortie (21) est la région d'où les récipients en plastique (2) sont retirés du moule creux (6) au moyen d'un élément de retrait et/ou de transport et sont transportés hors du poste de traitement (5) respectif et qui finit avec le commencement de l'étape de traitement suivante.

9. Procédé selon la revendication 8, dans lequel le refroidissement du récipient en plastique (2) comprend un refroidissement de régions individuelles, en particulier de fond, de collet de butée, de col et/ou d'épaulement, du récipient en plastique (2), ou de la totalité du récipient en plastique (2).

10. Procédé selon la revendication 8 ou 9, dans lequel le refroidissement du récipient en plastique (2) comprend un refroidissement d'éléments de préhension et/ou de retenue (23), en particulier de crochets et/ou de pinces conçu(e)s pour retirer le récipient en plastique (2) du moule creux (6).

11. Procédé selon l'une quelconque des revendications 8 à 10, dans lequel les récipients en plastique (2) sont refroidis par air comprimé et/ou par contact avec un liquide.

12. Procédé selon l'une quelconque des revendications 8 à 11, dans lequel les récipients en plastique (2) à refroidir sont placés sur une surface de stationnement (25, 26) refroidie ou sont introduits, en particulier placés, dans un logement qui refroidit directement le récipient (2) ou qui contient un réfrigérant avec lequel le récipient en plastique (2) est mis en contact.

13. Procédé selon l'une quelconque des revendications 9 à 13, dans lequel le refroidissement comprend le fait qu'au moins une partie des récipients en plastique (2) et/ou les éléments de préhension et/ou de retenue (23) sont aspergés, en particulier avec de la glace carbonique évaporée.

14. Procédé selon l'une quelconque des revendications 8 à 14, dans lequel au moins une partie du dispositif de refroidissement (22) se déplace avec les récipients en plastique (2), en particulier le long d'une étoile de transfert (9).
